# EUROPEAN PATENT SPECIFICATION

(11) **EP 2 879 221 B1**
(45) Date of publication and mention of the grant of the patent: **02.05.2018**
(21) Application number: 13823268.1
(22) Date of filing: 26.07.2013
(51) Int. Cl.: H01M 8/04828, H01M 8/04664, H01M 8/04701, H01M 16/00, H01M 8/04992, H01M 8/124

(54) **CONTROL DEVICE, FUEL CELL SYSTEM AND CONTROL METHOD**
STEUERUNGSVORRICHTUNG, BRENNSTOFFZELLENSYSTEM UND STEUERUNGSVERFAHREN
DISPOSITIF DE COMMANDE, SYSTÈME DE PILE À COMBUSTIBLE ET PROCÉDÉ DE COMMANDE

(30) Priority: 27.07.2012 JP 2012167811
(43) Date of publication of application: 03.06.2015
(73) Proprietor: Kyocera Corporation, Kyoto-shi Kyoto 612-8501 (JP)
(72) Inventor: NAKAMURA, Kazutaka, Kyoto-shi Kyoto 612-8501 (JP); OKINO, Kenta, Kyoto-shi Kyoto 612-8501 (JP); SATO, Hirotaka, Kyoto-shi Kyoto 612-8501 (JP); SHIGEHISA, Takashi, Kyoto-shi Kyoto 612-8501 (JP); ONO, Takashi, Kyoto-shi Kyoto 612-8501 (JP); TANIGUCHI, Eiji, Kyoto-shi Kyoto 612-8501 (JP); INOUE, Hiroshi, Kyoto-shi Kyoto 612-8501 (JP)
(74) Representative: Schwabe - Sandmair - Marx
(86) International application number: PCT/JP2013/070321
(87) International publication number: WO 2014/017632

(56) References cited:
- EP-A1- 2 869 380
- JP-A- 2008 022 650
- JP-A- 2008 262 727
- JP-A- 2010 218 692
- US-A1- 2004 053 093

## Description

### TECHNICAL FIELD

The present invention relates to a control apparatus which controls a fuel cell unit provided with a power generation unit and auxiliaries, a fuel cell system therefor, and a control method therefor.

### BACKGROUND ART

Recently, it is known a fuel cell unit provided with a power generation unit which generates power upon chemical reaction and auxiliaries which assists an operation of the power generation unit (for example, Patent Literature 1). In a normal operation, power to be output (power to be generated) from the fuel cell unit is controlled to follow a power consumption of a load arranged on a power line connecting a grid and the fuel cell unit (load following control).

Incidentally, as an operation mode of a fuel cell unit, there is known an operation mode in which a power consumption of the auxiliaries is covered by the output power from the power generation unit (hereinafter, idling mode) (for example, Patent Literature 2 and Non Patent Literature 1). In particular, in the idling mode, the output power from the power generation unit is controlled to be comparable to the power consumption of the auxiliaries. In the idling mode, the operation of the fuel cell unit is continued when a power demand in a load is temporarily low, for example.

EP 2 869 380 A1 discloses a control apparatus including a control unit which instructs a constant temperature mode to the fuel cell unit as one of operation modes, the constant temperature mode being a mode for performing an control to cover power consumption of the auxiliaries by power supplied from the outside and an control to keep a temperature of the power generation unit constant within a prescribed temperature range. In the constant temperature mode, power output from the power generation unit is at least smaller than the power consumption of the auxiliaries.

US 2004/0053093 A1 discloses a regulated DC power supply that facilitates extended and uninterrupted power to a load by using a secondary power source such as a regenerative fuel cell that has its DC power output conditioned by a power converter. The DC power supply includes a rectifier that converts AC power from an AC power source to DC power for a load coupled to a DC bus. A fuel cell arrangement is electrically coupled to a power converter that is coupled in turn to the DC bus, the converter conditions an unconditioned DC power output of the fuel cell to the load. A system controller is communicatively coupled to the rectifier, the converter and to a fuel cell controller, the fuel cell controller initiating DC power output from the fuel cell arrangement upon detecting the AC power outage (or disengaging the fuel cell upon resumption of AC power).

### CITATION LIST

### PATENT LITERATURE

Patent Literature 1: Japanese Patent Application Publication No. 2010-15783
Patent Literature 2: Japanese Patent Application Publication No. 2006-12689

### NON PATENT LITERATURE

Non Patent Literature 1: Osaka Gas Co., Ltd., "SOFC System Technological Development", [Online], [searched on June 27, 2012], Internet (URL: http://www.osakagas.co.jp/rd/fuelcell/sofe/technology/system.html)

### SUMMARY OF INVENTION

However, in the above-described idling mode, the power consumption of the auxiliaries is covered by the output power of the power generation unit, and thus, it is necessary to supply the fuel cell unit with an amount of fuel (gas, etc.) that would enable the power generation unit to generate power, as a result of which it is not possible to sufficiently save the fuel.

Thus, the present invention has been achieved in order to resolve the above-described problems, and an object thereof is to provide a control apparatus, a fuel cell system, and a control method which can perform effective operation control of a fuel cell unit. In order to achieve these objects, a control apparatus according to claim 1, a fuel cell system according to claim 10 and a method according to claim 11 are provided.

A control apparatus according to a first feature controls a fuel cell unit provided with a power generation unit which generates power upon chemical reaction and auxiliaries which assists an operation of the power generation unit. The control apparatus includes: a control unit which instructs an operation mode of the fuel cell unit, to the fuel cell unit. The operation mode of the fuel cell unit includes: a constant temperature mode for performing a control to cover power consumption of the auxiliaries by grid power and a control to keep a temperature of the power generation unit constant within a predetermined temperature range, where the power output from the power generation unit is smaller than the power consumption of the auxiliaries; and a self-support mode for performing a control to cover the power consumption of the auxiliaries by power different from the grid power. The control unit instructs to change the operation mode of the fuel cell unit to the self-support mode when a power failure occurs while the fuel cell unit is operating in the constant temperature mode.

In the first feature, the control unit is capable of controlling a distributed power supply unit capable of supplying the fuel cell unit with power. The control unit controls the distributed power supply unit to cover, for a predetermined period, the power consumption of the auxiliaries by the power output from the distributed power supply unit, when instructing the self-support mode in response to a power failure occurs while the fuel cell unit is operated in the constant temperature mode.

In the first feature, the predetermined period is a period which lasts until the temperature of the power generation unit reaches a power generation temperature when power is generated at the power generation unit in the self-support mode.

In the first feature, the predetermined temperature range is a temperature range lower than the power generation temperature in the self-support mode.

In the first feature, the predetermined period is a period during which fuel supplied to the power generation unit increases.

In the first feature, the control unit instructs so as to change the operation mode of the fuel cell unit to the constant temperature mode when restoration is achieved from a power failure while the fuel cell unit is operated in the self-support mode.

In the first feature, the control unit instructs a power generation mode as one of the operation modes, the power generation mode being a mode in which the power output from the power generation unit is controlled to follow a power consumption of a load connected to the fuel cell unit.

In the first feature, the control unit instructs to change the operation mode of the fuel cell unit to the self-support mode when a power failure occurs while the fuel cell unit is operated in the power generation mode.

In the first feature, the power generation unit has a fuel cell of a SOFC system.

In the first feature, the power generation temperature in the self-support mode is 650°C to 1000°C, and the predetermined temperature range is 450°C to 600°C.

In the first feature, an amount of fuel to be supplied to the power generation unit in the constant temperature mode is smaller than an amount of fuel to be supplied to the power generation unit in the self-support mode.

A fuel cell system according to a second feature is provided with a fuel cell unit provided with a power generation unit which generates power upon chemical reaction and auxiliaries which assists an operation of the power generation unit. The fuel cell unit includes a control unit which controls an operation of the fuel cell unit itself by one of operation modes, the operation modes including a constant temperature mode for performing a control to cover a power consumption of the auxiliaries by grid power and a control to keep a temperature of the power generation unit constant within a predetermined temperature range, where the power output from the power generation unit is smaller than the power consumption of the auxiliaries, and a self-support mode for performing a control to cover the power consumption of the auxiliaries by power different from the grid power. The control unit controls the operation of the control unit itself by the self-support mode when a power failure occurs while the operation of the control unit itself is controlled by the constant temperature mode.

A control method according to a third feature is a method of controlling a fuel cell unit provided with a power generation unit which generates power upon chemical reaction and auxiliaries which assists an operation of the power generation unit. The control method includes: a step of instructing one of operation modes to the fuel cell unit, the operation modes including a constant temperature mode for performing a control to cover a power consumption of the auxiliaries by grid power and a control to keep a temperature of the power generation unit constant within a predetermined temperature range, where the power output from the power generation unit is smaller than the power consumption of the auxiliaries; and a self- support mode for performing a control to cover the power consumption of the auxiliaries by power different from the grid power. The operation mode of the fuel cell unit is instructed to be the self-support mode when a power failure occurs while the fuel cell unit is operated in the constant temperature mode.

According to the present invention, it is possible to provide a control apparatus, a fuel cell unit, and a control method which can to sufficiently save fuel.

### BRIEF DESCRIPTION OF DRAWINGS

[Fig. 1] Fig. 1 is a diagram showing an energy management system 100 according to a first embodiment.
[Fig. 2] Fig. 2 is a diagram showing a consumer's facility 10 according to the first embodiment.
[Fig. 3] Fig. 3 is a diagram showing a fuel cell unit 150 according to the first embodiment.
[Fig. 4] Fig. 4 is a diagram showing an EMS 200 according to the first embodiment.
[Fig. 5] Fig. 5 is a flowchart showing a control method according to the first embodiment.
[Fig. 6] Fig. 6 is a flowchart showing a control method according to the first embodiment.

### DESCRIPTION OF EMBODIMENTS

Hereinafter, a control apparatus and control method according to embodiments of the present invention will be described with reference to the drawings. In the following drawings, identical or similar components are denoted by identical or similar reference numerals.

It should be understood that the drawings are schematic only and the ratio of dimensions is not to scale. Therefore, specific dimensions should be determined with reference to the description below. It is needless to mention that different relationships and ratio of dimensions may be included in different drawings.

### [Outline of the embodiments]

A control apparatus according to embodiments controls a fuel cell unit provided with a power generation unit which generates power upon chemical reaction and auxiliaries which assists an operation of the power generation unit. The control apparatus includes: a control unit which instructs an operation mode of the fuel cell unit, to the fuel cell unit. The operation mode of the fuel cell unit includes: a constant temperature mode for performing a control to cover power consumption of the auxiliaries by grid power and a control to keep a temperature of the power generation unit constant within a predetermined temperature range, where the power output from the power generation unit is smaller than the power consumption of the auxiliaries; and a self-support mode for performing a control to cover the power consumption of the auxiliaries by power different from the grid power. The control unit instructs to change the operation mode of the fuel cell unit to the self-support mode when a power failure occurs while the fuel cell unit is operating in the constant temperature mode.

In the embodiments, the plurality of operation modes including the constant temperature mode are introduced. As a result, in the constant temperature mode, it is possible to perform effective operation control on the fuel cell unit, even when the best effort is made not to completely stop the fuel cell unit in order to ensure the load following.

### [First Embodiment]

### (Energy management system)

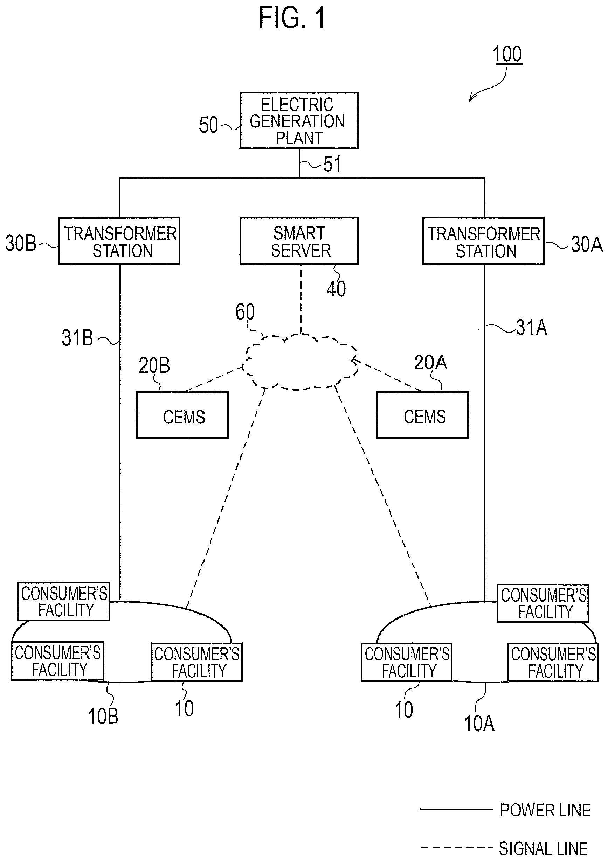

The energy management system according to the first embodiment will be described, below. Fig. 1 is a diagram showing an energy management system 100 according to the first embodiment.

As shown in Fig. 1, the energy management system 100 includes a consumer's facility, a CEMS 20, a transformer station 30, a smart server 40, and an electric generation plant 50. It is noted that the consumer's facility, the CEMS 20, the transformer station 30, and the smart server 40 are connected by a network 60.

The consumer's facility has a power generation apparatus and a power storage apparatus, for example. The power generation apparatus is an apparatus which uses fuel to output power such as a fuel cell, for example. The power storage apparatus such as a secondary battery is an apparatus in which power is stored.

The consumer's facility may be a detached residence, a housing complex such as an apartment house. Or, the consumer's facility may be a shop such as a corner store or a supermarket. It is noted that the consumer's facility may be a business facility such as an office building or a factory.

In the first embodiment, a consumer's facility group 10A and a consumer's facility group 10B are configured by a plurality of the consumer's facilities 10. The consumer's facility group 10A and consumer's facility group 10B are classified into each geographical region, for example.

The CEMS 20 controls an interconnection between the plurality of consumer's facilities 10 and the power grid. It is noted that the CEMS 20 may be also called a CEMS (Cluster/Community Energy Management System), since the CEMS 20 manages the plurality of consumer's facilities 10. Specifically, the CEMS 20 disconnects the plurality of consumer's facilities 10 and the power grid at a power failure or the like. On the other hand, the CEMS 20 interconnects the plurality of consumer's facilities 10 to the power grid, for example, at restoration of power.

In the first embodiment, a CEMS 20A and a CEMS 20B are provided. The CEMS 20A controls an interconnection between the consumer's facilities 10 included in the consumer's facility group 10A and the power grid, for example. The CEMS 20B controls an interconnection between the consumer's facilities 10 included in the consumer's facility group 10B and the power grid, for example.

The transformer station 30 supplies power to the plurality of consumer's facilities 10 through a distribution line 31. Specifically, the transformer station 30 lowers the voltage supplied from the electric generation plant 50.

In the first embodiment, a transformer station 30A and a transformer station 30B are provided. The transformer station 30A supplies power to the consumer's facilities 10 included in the consumer's facility group 10A through a distribution line 31A, for example. The transformer station 30B supplies power to the consumer's facilities 10 included in the consumer's facility group 10B through a distribution line 31B, for example.

The smart server 40 manages a plurality of the CEMSs 20 (here, the CEMS 20A and CEMS 20B). Further, the smart server 40 manages a plurality of the transformer stations 30 (here, the transformer station 30A and the transformer station 30B). In other words, the smart server 40 integrally manages the consumer's facilities 10 included in the consumer's facility groups 10A and 10B. For example, the smart server 40 has a function of balancing the power to be supplied to the consumer's facility group 10A and the power to be supplied to the consumer's facility group 10B.

The electric generation plant 50 generates power by thermal power, solar power, wind power, water power, atomic power or the like. The electric generation plant 50 supplies power to the plurality of the transformer stations 30 (here, the transformer station 30A and the transformer station 30B) through an electric feeder line 51.

The network 60 is connected to each apparatus via a signal line. The network 60 is an Internet, a wide area network, a narrow area network, and a mobile phone network, for example.

### (Consumer's facility)

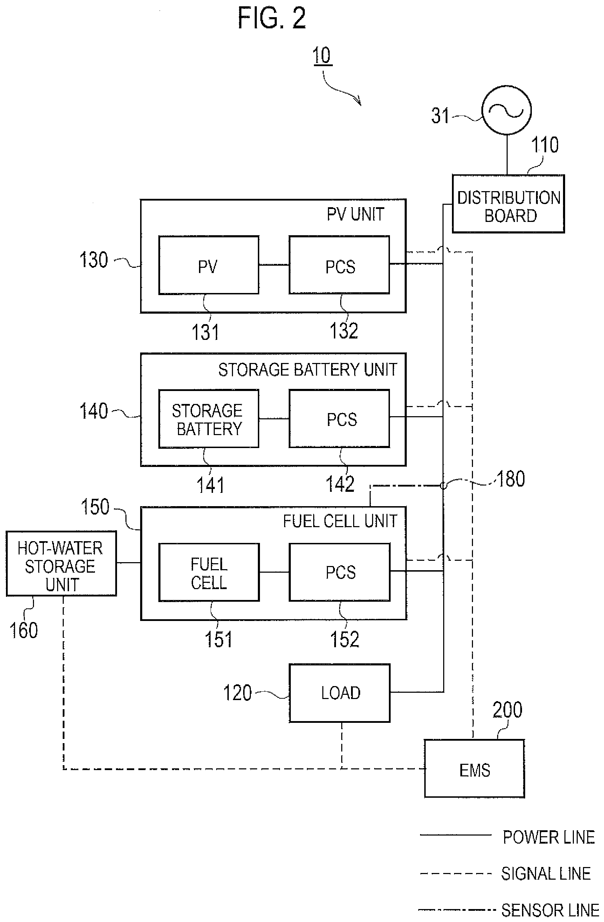

The consumer's facility according to the first embodiment will be described, below. Fig. 2 is a diagram showing the details of the consumer's facility according to the first embodiment.

As shown in Fig. 2, the consumer's facility includes a distribution board 110, a load 120, a PV unit 130, a storage battery unit 140, a fuel cell unit 150, a hot-water storage unit 160, and an EMS 200.

In the first embodiment, a consumer's facility 10 includes an ammeter 180. The ammeter 180 is used for the load following control on the fuel cell unit 150. The ammeter 180 is arranged downstream (at the side apart from the grid) of a connection point between the storage battery unit 140 and a grid and upstream (at the side closer to the grid) of a connection point between the fuel cell unit 150 and a power line, on the power line connecting the storage battery unit 140 and the fuel cell unit 150, and the grid. It is natural that the ammeter 180 is arranged upstream (at the side closer to the grid) of the connection point between the load 120 and the power line.

It should be noted that in the first embodiment, each unit is connected to the power line, in order of proximity to the grid, that is, in order of the PV unit 130, the storage battery unit 140, the fuel cell unit 150, and a load 120. However, it is possible to implement the present invention even if the fuel cell unit 150 and the storage battery unit 140 are reversely connected.

The distribution board 110 is connected to the distribution line 31 (grid). The distribution board 110 is connected, via a power line, to the load 120, the PV unit 130, the storage battery unit 140, and the fuel cell unit 150.

The load 120 is an apparatus which consumes the power supplied via a power line. Examples of the load 120 include an apparatus such as a refrigerator, a freezer, a lighting, and an air conditioner.

The PV unit 130 includes a PV 131 and a PCS 132. The PV 131 is an example of the power generation apparatus, and is a solar light power generation apparatus (Photovoltaic device) which generates power in response to reception of solar light. The PV 131 outputs the generated DC power. The amount of power generated by the PV 131 varies depending on the amount of solar radiation entering the PV 131. The PCS 132 is an apparatus (Power Conditioning System) which converts the DC power output from the PV 131, into AC power. The PCS 132 outputs the AC power to the distribution board 110 via a power line.

In the first embodiment, the PV unit 130 may include a pyranometer which measures the solar radiation entering the PV 131.

The PV unit 130 is controlled by an MPPT (Maximum Power Point Tracking) method. In particular, the PV unit 130 optimizes an operation point (point determined by an operation-point voltage value and power value, or a point determined by an operation-point voltage value and current value) of the PV 131.

The storage battery unit 140 includes a storage battery 141 and a PCS 142. The storage battery 141 is an apparatus which stores power. The PCS 142 is an apparatus (Power Conditioning System) which converts the AC power supplied from the distribution line 31 (grid), into DC power. Further, the PCS 142 converts the DC power output from the storage battery 141, into AC power.

The fuel cell unit 150 includes a fuel cell 151 and a PCS 152. The fuel cell 151 is an example of a power generation apparatus, and an apparatus which outputs power by using a fuel gas. The PCS 152 is an apparatus (Power Conditioning System) which converts the DC power output from the fuel cell 151, into AC power.

The fuel cell unit 150 is operated by load following control. In particular, the fuel cell unit 150 controls the fuel cell 151 so that the power output from the fuel cell 151 reaches a target power of the load following control. The load following control as used herein includes control in which an insufficient power amount requested from the load 120 is covered by the power supplied from the grid (grid power) when the power consumption in the load 120 exceeds the output power in a rated operation of the fuel cell unit 150.

The hot-water storage unit 160 is an example of a heat storage apparatus which converts power into heat and stores the converted heat as hot water, and stores the heat generated by a co-generation equipment such as the fuel cell unit 150 as hot water. Specifically, the hot-water storage unit 160 includes a hot-water storage tank where the water supplied from the hot-water storage tank is warmed by the heat exhausted by drive (power generation) of the fuel cell 151. In particular, the hot-water storage unit 160 warms the water supplied from the hot-water storage tank and feeds the warmed water back to the hot-water storage tank.

The EMS 200 is an apparatus (Energy Management System) which controls the PV unit 130, the storage battery unit 140, the fuel cell unit 150, and the hot-water storage unit 160. Specifically, the EMS 200 is connected, via a signal line, to the PV unit 130, the storage battery unit 140, the fuel cell unit 150, and the hot-water storage unit 160, and controls the PV unit 130, the storage battery unit 140, the fuel cell unit 150, and the hot-water storage unit 160. Further, the EMS 200 controls an operation mode of the fuel cell unit 150 to control the power consumption of the load 120.

Further, the EMS 200 is connected, via the network 60, to various types of servers. The various types of servers store information such as a purchase unit price of power supplied from a grid, a sales unit price of the power supplied from the grid, and a purchase unit price of fuel, for example (hereinafter, energy rate information).

Alternatively, various types of servers store information for predicting the power consumption of the load 120 (hereinafter, consumed-energy prediction information), for example. The consumed-energy prediction information may be generated on the basis of an actual value of the power consumption of the load 120 in the past, for example. Alternatively, the consumed-energy prediction information may be a model of the power consumption of the load 120.

Alternatively, various types of servers store information for predicting an amount of power generated by the PV 131 (hereinafter, PV-power-generation-amount prediction information), for example. The PV-power-generation prediction information may be a predicted value of a solar radiation entering the PV 131. Alternatively, the PV-power-generation prediction information may be a weather forecast, a season, and hours of sunlight, for example.

### (Fuel cell unit)

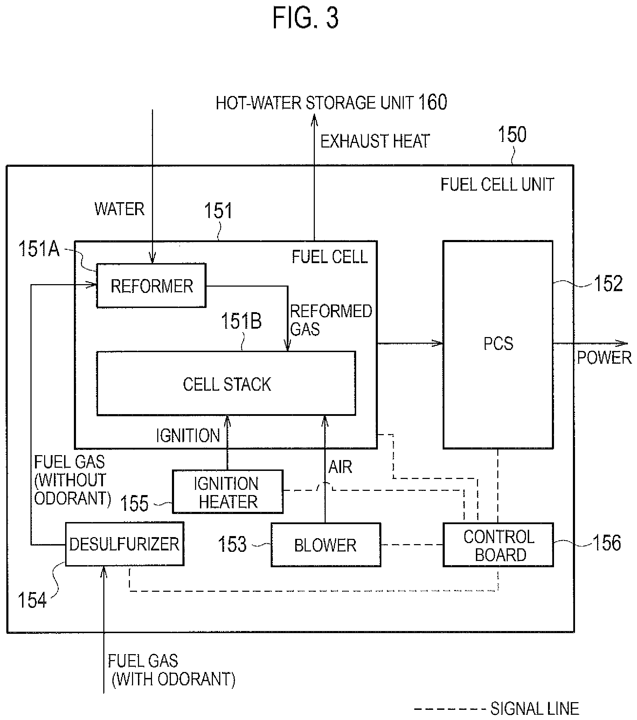

Hereinafter, the fuel cell unit according to the first embodiment will be described. Fig. 3 is a diagram showing the fuel cell unit 150 according to the first embodiment.

As shown in Fig. 3, the fuel cell unit 150 includes a fuel cell 151, a PCS 152, a blower 153, a desulfurizer 154, an ignition heater 155, and a control board 156.

The fuel cell 151 is an apparatus which uses fuel to output power, as described above. The fuel cell 151 is a fuel cell of a SOFC (Solid Oxide Fuel Cell) system, for example. Specifically, the fuel cell 151 includes a reformer 151A and a cell stack 151B.

The reformer 151A generates reformed gas from fuel obtained by removing odorant by the desulfurizer 154 described later. The reformed gas is comprised of hydrogen and carbon monoxide.

The cell stack 151B generates power upon chemical reaction between air (oxygen) supplied from the blower 153 described later and the reformed gas. Specifically, the cell stack 151B has a structure obtained by stacking a plurality of cells on top of one another. Each cell has a structure in which an electrolyte is sandwiched between a fuel electrode and an air electrode. The fuel electrode is supplied with reformed gas (hydrogen) and the air electrode is supplied with air (oxygen). In the electrolyte, a chemical reaction between reformed gas (hydrogen) and air (oxygen) occurs, and as a result, power (DC power) and heat are generated.

The PCS 152 is an apparatus which converts the DC power output from the fuel cell 151 into AC power, as described above.

The blower 153 supplies the fuel cell 151 (cell stack 151B) with air. The blower 153 is configured by a fan, for example.

The desulfurizer 154 removes the odorant included in fuel supplied from outside. Fuel may be city gas or LP gas.

The ignition heater 155 ignites fuel not chemically reacted in the cell stack 151B (hereinafter, unreacted fuel), and maintains a temperature of the cell stack 151B at high temperature. That is, the ignition heater 155 ignites the unreacted fuel leaked from an opening of each cell configuring the cell stack 151B. It should be noted that the ignition heater 155 may suffice to ignite the unreacted fuel in a case where the unreacted fuel is not burnt (for example, when the fuel cell unit 150 is started). Then, once ignited, when the unreacted fuel gradually leaked from the cell stack 151B keeps on burning, the temperature of the cell stack 151B is kept at high temperature.

The control board 156 is a board mounted with a circuit which controls the fuel cell 151, the PCS 152, the blower 153, the desulfurizer 154, the ignition heater 155, and the control board 156.

In the first embodiment, the cell stack 151B is an example of a power generation unit which generates power upon chemical reaction. The reformer 151A, the blower 153, the desulfurizer 154, the ignition heater 155, and the control board 156 are an example of auxiliaries which assists an operation of the cell stack 151B (power generation unit). Further, a part of the PCS 152 may be treated as the auxiliaries.

In the first embodiment, an operation mode of the fuel cell unit 150 includes a power generation mode, an idling mode, and a constant temperature mode.

The power generation mode is an operation mode (load following control) in which the power output from the fuel cell 151 (cell stack 151B) is controlled to follow the power consumption of the load 120 connected to the fuel cell unit 150. In particular, in the power generation mode, so that the product of a current value detected by the ammeter 180 and power detected by the PCS 152 becomes target received power, the power output from the fuel cell 151 is controlled. Here, it should be noted here that the fuel cell unit 150 is arranged downstream of the ammeter 180, and thus, the power consumption of the auxiliaries also is covered by the power output from the fuel cell 151.

Here, the temperature of the cell stack 151B in the power generation mode is maintained at 650 to 1000°C (for example, about 700°C) as a power generation temperature, upon chemical reaction and burning of an unreacted fuel. Such a power generation temperature, that is, when reformed gas (hydrogen) and air (oxygen) are obtained, is in a temperature range in which a chemical reaction is promoted.

Incidentally, it is also possible to completely stop the fuel cell unit 150. The fuel cell unit 150 may be completely stopped, for example, when the fuel cell unit 150 is not used for a long time. However, when the fuel cell unit 150 is completely stopped, the auxiliaries also is stopped and the temperature of the fuel cell 151 (cell stack 151B) becomes low, and thus, it takes a long period of time until the temperature rises to a level by which it would be possible to generate power, resulting in an operation in a low load following. Therefore, in the first embodiment, in order to avoid a complete stoppage of the fuel cell unit 150 as much as possible, the idling mode and the constant temperature mode are included in the operation mode.

The idling mode is an operation mode in which the power consumption of the auxiliaries is covered by the power output from the fuel cell 151 (cell stack 151B) or the power supplied from an additionally provided distributed power supply. The idling mode as used herein may also be called a self-support mode because this is a mode in which the output power from the fuel cell unit 150 is controlled to be zero.

Here, the power generation temperature of the cell stack 151B in the idling mode is maintained at a temperature comparable to the power generation temperature in the power generation mode or slightly lower than that power generation temperature (for example, about 700°C), upon chemical reaction and burning of an unreacted fuel. That is, the power generation temperature of the cell stack 151B in the idling mode is in a temperature range in which a chemical reaction is promoted once reformed gas (hydrogen) and air (oxygen) are obtained, similarly to the power generation mode.

The constant temperature mode is an operation mode in which the power consumption of the auxiliaries is covered by the power supplied from the grid, and the cell stack 151B is kept within a predetermined temperature range. In the constant temperature mode, the power output from the fuel cell 151 (cell stack 151B) is smaller than, at least, the power consumption of the auxiliaries, and as in the idling mode, the power just falls short of the strength allowing the auxiliaries to be operated. For example, in the constant temperature mode, the power is not output from the fuel cell 151 (cell stack 151B).

Here, the temperature of the cell stack 151B in the constant temperature mode is kept, primarily, by the burning of an unreacted fuel. Further, the temperature of the cell stack 151B in the constant temperature mode is lower than the temperature of the cell stack 151B in the power generation mode. Likewise, the temperature of the cell stack 151B in the constant temperature mode is lower than the temperature of the cell stack 151B in the idling mode. However, as a result of the unreacted fuel being burnt, the temperature of the cell stack 151B in the constant temperature mode is kept at a certain level of high temperature (predetermined temperature range).

In the first embodiment, the predetermined temperature range is slightly lower than the power generation temperature in the idling mode, for example, about 450°C to 600°C, and is in a temperature range in which a sufficient chemical reaction does not easily occur even when the reformed gas (hydrogen) and air (oxygen) are obtained. When the temperature of the cell stack 151B is kept within a predetermined temperature range, the reaction speed of a chemical reaction is not high enough, and thus, the voltage output from the fuel cell 151 (cell stack 151B) is lower than rated voltage (for example, 200 V). In the constant temperature mode, a chemical reaction may not occur at all, or a slight chemical reaction may occur. However, the predetermined temperature range is obviously higher than a normal temperature. Thus, in the constant temperature mode, also when it is necessary to generate power, it takes less time to reach a temperature at which the chemical reaction is promoted as compared to a state where the fuel cell unit 150 is completely stopped and it is possible to shorten a time until the required power is output.

Further, the amount of fuel to be supplied to the cell stack 151B in the constant temperature mode is smaller than the amount of fuel to be supplied to the cell stack 151B in the power generation mode.

### (Configuration of EMS)

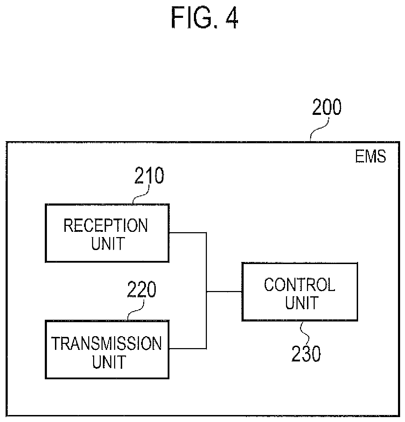

The EMS of the first embodiment will be described, below. Fig. 4 is a block diagram showing the EMS 200 according to the first embodiment.

As shown in Fig. 4, the EMS 200 has a reception unit 210, a transmission unit 220, and a control unit 230.

The reception unit 210 receives various types of signals from an apparatus connected via a signal line. For example, the reception unit 210 may receive information indicating the amount of power generated by the PV 131, from the PV unit 130. The reception unit 210 may receive information indicating the amount of power to be stored in the storage battery 141, from the storage battery unit 140. The reception unit 210 may receive information indicating the amount of power generated by the fuel cell 151, from the fuel cell unit 150. The reception unit 210 may receive information indicating the amount of hot water to be stored in hot-water storage unit 160, from a hot-water storage unit 160.

In the first embodiment, the reception unit 210 may receive energy rate information, consumed-energy prediction information, and PV-power-generation-amount prediction information from various types of servers via a network 60. However, the energy rate information, the consumed-energy prediction information, and the PV-power-generation-amount prediction information may be stored in advance in the EMS 200.

The transmission unit 220 transmits various types of signals to an apparatus connected via a signal line. For example, the transmission unit 220 transmits a signal for controlling the PV unit 130, the storage battery unit 140, the fuel cell unit 150, and the hot-water storage unit 160, to each apparatus. The transmission unit 220 transmits a control signal for controlling the load 120, to the load 120.

The control unit 230 uses a predetermined communication protocol such as ECHONET Lite or ZigBee (registered trademark) to control the load 120, the PV unit 130, the storage battery unit 140, the fuel cell unit 150, and the hot-water storage unit 160.

In the first embodiment, the control unit 230 transmits a command that complies with a predetermined communication protocol to the transmission unit 220 to thereby instruct, to the fuel cell unit 150, the operation mode of the fuel cell unit 150. In the first embodiment, the operation mode of the fuel cell unit 150 includes the power generation mode (load following control), the idling mode, and the constant temperature mode, as described above.

When the power output from the fuel cell 151 (cell stack 151B) exceeds a predetermined threshold value, the control unit 230 controls the fuel cell unit 150 to operate in the power generation mode. On the other hand, when the power output from the fuel cell 151 (cell stack 151B) falls below a predetermined threshold value, for example, the control unit 230 controls the fuel cell unit 150 to operate in the constant temperature mode. Further, the control unit 230 controls the fuel cell unit 150 to operate in the idling mode when a power failure occurs, for example.

If a power failure occurs when the fuel cell unit 150 is operated in the constant temperature mode, then the power to be supplied to the auxiliaries of the fuel cell unit 150 from the grid is stopped. Therefore, in the first embodiment, the control unit 230 controls the distributed power supply unit to supply the auxiliaries with the power output from the PV unit 130 and/or the storage battery unit 140 (hereinafter, distributed power supply unit) if a power failure state is detected when the fuel cell unit 150 is operated in the constant temperature mode, and controls the fuel cell unit 150 to operate in the idling mode.

Here, the power output from the fuel cell 151 (cell stack 151B) in the constant temperature mode is smaller than the power consumption of the auxiliaries. On the other hand, the control unit 230 increases the amount of fuel to be supplied to the fuel cell 151 (cell stack 151B) and raises the temperature of the fuel cell 151 (cell stack 151B) to promote a chemical reaction. When the temperature of the fuel cell 151 (cell stack 151B) is risen to the power generation temperature in the idling mode, the output power is increased to a level by which it is possible to cover the power consumption of the auxiliaries. When the temperature of the fuel cell 151 (cell stack 151B) is risen to the power generation temperature in the idling mode, the control unit 230 controls the distributed power supply unit to stop the power supply to the auxiliaries.

In the first embodiment, when a power restoration is detected when the fuel cell unit 150 is operated in the idling mode, the control unit 230 controls the fuel cell unit 150 to operate in the constant temperature mode. That is, the control unit 230 decreases the amount of fuel supplied to the fuel cell 151 (cell stack 151B), lowers the temperature of the fuel cell 151 (cell stack 151B), and keeps the temperature constant within a predetermined temperature range.

In the first embodiment, needless to say, when a power failure state is detected when the fuel cell unit 150 is operated in the power generation mode, the control unit 230 controls the fuel cell unit 150 to operate in the idling mode. When the power restoration is detected while the fuel cell unit 150 is operated in the idling mode, the control unit 230 may control the fuel cell unit 150 to operate in the power generation mode.

### (Control method)

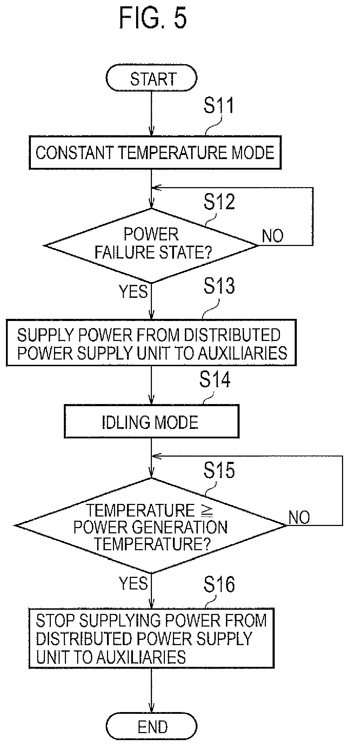

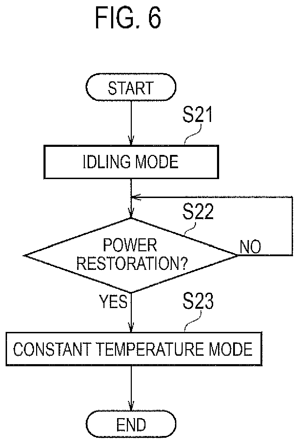

Hereinafter, a control method according to the first embodiment will be described. Fig. 5 and Fig. 6 are flowcharts showing the control method according to the first embodiment. The operation mode of the fuel cell unit 150 includes the power generation mode, the idling mode, and the constant temperature mode; however, in the description that follows, a control method of a battery unit 150 in an operation mode other than the power generation mode when the power consumption of a load is small, for example, will be described.

Fig. 5 is a flowchart showing a control method when a power failure occurs. As shown in Fig. 5, in step S11, the EMS 200 controls the fuel cell unit 150 to operate in the constant temperature mode. As described above, in the constant temperature mode, the power consumption of the auxiliaries is covered by the power supplied from the grid, and the temperature of the cell stack 151B is kept within a predetermined temperature range lower than the power generation temperature in the idling mode. In the constant temperature mode, the power output from the fuel cell 151 is smaller than, at least, the power consumption of the auxiliaries, and may even be zero.

In step S12, the EMS 200 determines whether or not a current state is a power failure state. When the determination result is "YES" and the power failure state of the grid is detected, a process in step S13 is immediately performed. When the determination result is "NO", the method returns to the process in step S12. In step S13, the EMS 200 controls the distributed power supply unit to supply the auxiliaries with the power output from the distributed power supply unit.

In step S14, the EMS 200 controls the fuel cell unit 150 to cover the power consumption of the auxiliaries from other than the grid power, that is, to operate in the idling mode.

Next, in step S15, the EMS 200 determines whether or not the temperature of the cell stack 151B is equal to or more than the power generation temperature in the idling mode. When the determination result is "YES", a process in step S16 is performed. When the determination result is "NO", the method returns to the process in step S15. In step S16, the EMS 200 stops the power supply to the auxiliaries from the distributed power supply unit. That is, in step S16, the power supply source to the auxiliaries is switched from the distributed power supply unit to the fuel cell 151 (cell stack 151B) itself.

Thus, even when it is not possible to receive the power supply from the grid because the grid is in a power failure state, if the auxiliaries receives the power supply from the distributed power supply unit, then the fuel cell unit 150 is capable of continuing the operation. Even when the grid is in a power failure state and the auxiliaries is not capable of receiving the power supply from the grid, the power generation in the fuel cell 151 (cell stack 151B) is caused upon chemical reaction, and thus, the power generation is not immediately stopped. That is, even when the power failure occurs and the power supply from the grid to the auxiliaries are thereby stopped, a chemical reaction continues for a while just to cover the power consumption of the auxiliaries. Thus, the fuel cell unit 150 is capable of continuing the operation by changing the power supply source to the auxiliaries from the grid to the distributed power supply unit until the fuel cell unit 150 is capable of covering the power consumption of the auxiliaries by the power generated by the fuel cell unit 150 itself even when the power failure is detected. Thus, in the idling mode, basically, the power output from the fuel cell 151 is supplied to the auxiliaries; however, the power is not supplied to the load 120.

Fig. 6 is a flowchart showing a control method when the power is restored from a power failure. As shown in Fig. 6, in step S21, the EMS 200 controls the fuel cell unit 150 to operate in the idling mode.

In step S22, the EMS 200 determines whether or not a current state is restored from a power failure state. When the determination result is "YES" and the power restoration state of the grid is detected, a process in step S23 is immediately performed. When the determination result is "NO", the method returns to the process in step S22. In step S23, the EMS 200 controls the fuel cell unit 150 to operate in the constant temperature mode.

As described above, in the first embodiment, a plurality of operation modes including the idling mode and the constant temperature mode are introduced. As a result, in the constant temperature mode, it is possible to save the fuel supplied to the fuel cell unit 150, even when the best effort is made not to completely stop the fuel cell unit 150 in order to ensure the load following. Further, when the grid is in a power failure state, if the fuel cell unit 150 is controlled to operate in the idling mode, then it is possible to continue the operation of the fuel cell unit 150.

When a power failure state is detected while the fuel cell unit 150 is operated in the power generation mode, it goes without saying that the EMS 200 controls the fuel cell unit 150 to operate in the idling mode. When the power restoration is detected while the fuel cell unit 150 is operated in the idling mode, the EMS 200 may control the fuel cell unit 150 to operate in the power generation mode. In the power generation mode, the auxiliaries is controlled to follow the power consumption of the load 120 connected to the fuel cell unit 150, and the output from the fuel cell 151 is adjusted.

### [Other Embodiments]

Although the present invention has been described with reference to the embodiment described above, it should not be understood that the discussion and drawings constituting a part of the disclosure are limiting the present invention. Various alternative embodiments, examples and operation technology will be apparent to a person skilled in the art from the present disclosure.

For example, the fuel cell unit 150 is operated in the idling mode during the grid power failure; however, if there is a power demand in a load, it may be possible to operate in a self-sustained operation mode in which the power that matches the demand is output. In the self-sustained operation mode, the fuel cell unit 150 supplies the power to the auxiliaries by the fuel cell 151 itself, and also, the fuel cell unit 150 increases the output of the fuel cell 151 so that the output power that matches the demand in the load connected to the fuel cell unit 150 is obtained. That is, the self-sustained operation mode and the idling mode differ in that the generated power is output externally; however, these modes are common in that during the grid power failure, the power supply to the auxiliaries is covered by the self-power generation. Thus, it may consider that the self-sustained operation mode is included in the self-support mode.

Further, in the constant temperature mode, the power consumption of the auxiliaries is covered by the power supply from the grid; however, it may be covered by the output from the distributed power supply unit such as the PV unit 130 and/or the storage battery unit 140.

In the embodiment, the control apparatus is the EMS 200; however, the embodiment is not limited thereto. The control apparatus may be the PCS 152 or the control board 156.

The EMS 200 may be HEMS (Home Energy Management System), may be SEMS (Store Energy Management System), may be BEMS (Building Energy Management System), and may be FEMS (Factory Energy Management System).

In the embodiment, the consumer's facility 10 includes the load 120, the PV unit 130, the storage battery unit 140, the fuel cell unit 150, and the hot-water storage unit 160. However, it may suffice that the consumer's facility 10 includes at least the load 120 and the fuel cell unit 150.

In the embodiment, description proceeds with a case where the fuel cell 151 is a fuel cell of a SOFC (Solid Oxide Fuel Cell) system; however, this is not limiting. The fuel cell 151 may be a fuel cell of a PEFC (Polymer Electrolyte Fuel Cell) system, for example.

As described above, needless to say, the present invention includes various embodiments and the like not described here. Moreover, it is also possible to combine the above-described embodiments and modifications. Therefore, the technical range of the present invention is to be defined only by the inventive specific matter according to the adequate claims from the above description.

### INDUSTRIAL APPLICABILITY

According to the present invention, it is possible to provide a control apparatus, a fuel cell unit, and a control method which can sufficiently save fuel.

## Claims

1. A control apparatus (200) which is configured to control a fuel cell unit (150) provided with a power generation unit (151B) which generates power upon chemical reaction and auxiliaries which assists an operation of the power generation unit (151B), comprising:
a control unit (230) which is configured to instruct an operation mode of the fuel cell unit (150), to the fuel cell unit (150), wherein
the operation mode of the fuel cell unit (150) includes: a constant temperature mode for performing a control to cover power consumption of the auxiliaries by grid power and a control to keep a temperature of the power generation unit (151B) constant within a predetermined temperature range, where the power output from the power generation unit (151B) is smaller than the power consumption of the auxiliaries; and a self-support mode for performing a control to cover the power consumption of the auxiliaries by power different from the grid power, wherein the power is supplied by the power generation unit (151B), a photovoltaic unit (130) and/or a storage battery unit (140),
wherein the self-support mode is a mode not to provide the power output from the power generation unit (151B) to a load connected to the fuel cell unit (150) and to keep a temperature at a power generation temperature,
wherein the predetermined temperature range in the constant temperature mode is lower than the power generation temperature in the self-support mode,
**characterized in that**
the control unit (230) is configured to instruct to change the operation mode of the fuel cell unit (150) to the self-support mode when a grid power failure occurs while the fuel cell unit (150) is operating in the constant temperature mode,
wherein
the control unit (230) is capable of controlling a distributed power supply unit capable of supplying the fuel cell unit with power, wherein the distributed power supply unit comprises the photovoltaic unit (130) and/or the storage battery unit (140), and
the control unit (230) is configured to control the distributed power supply unit to cover, for a predetermined period, the power consumption of the auxiliaries by the power output from the distributed power supply unit, when instructing the self-support mode in response to a power failure occurs while the fuel cell unit (150) is operated in the constant temperature mode,
wherein the predetermined period is a period during which fuel supplied to the power generation unit increases.

2. The control apparatus according to claim 1, wherein
the predetermined period is a period which lasts until the temperature of the power generation unit (151B) reaches a power generation temperature when power is generated at the power generation unit (151B) in the self-support mode.

3. The control apparatus (200) according to claim 2, wherein
the predetermined temperature range is a temperature range lower than the power generation temperature in the self-support mode.

4. The control apparatus (200) according to claim 1, wherein
the control unit (230) is configured to instruct to change the operation mode of the fuel cell unit to the constant temperature mode when restoration is achieved from a power failure while the fuel cell unit is operated in the self-support mode.

5. The control apparatus according (200) to claim 1, wherein
the control unit (230) is configured to instruct a power generation mode as one of the operation modes, the power generation mode being a mode in which the power output from the power generation unit (151B) is controlled to follow a power consumption of a load connected to the fuel cell unit.

6. The control apparatus (200) according to claim 5, wherein
the control unit (230) is configured to instruct to change the operation mode of the fuel cell unit (150) to the self-support mode when a power failure occurs while the fuel cell unit (150) is operated in the power generation mode.

7. The control apparatus (200) according to claim 1, wherein
the power generation unit (151B) has a fuel cell of a SOFC system.

8. The control apparatus (200) according to claim 2, wherein
the power generation temperature in the self-support mode is 650°C to 1000°C, and the predetermined temperature range is 450°C to 600°C.

9. The control apparatus (200) according to claim 1, wherein
an amount of fuel to be supplied to the power generation unit (151B) in the constant temperature mode is smaller than an amount of fuel to be supplied to the power generation unit (151B) in the self-support mode.

10. A fuel cell system provided with a fuel cell unit (150) provided with a power generation unit (151B) which generates power upon chemical reaction and auxiliaries which assists an operation of the power generation unit, wherein
the fuel cell unit (150) includes a control unit (230) which is configured to control an operation of the fuel cell unit (150) itself by one of operation modes, the operation modes including a constant temperature mode for performing a control to cover a power consumption of the auxiliaries by grid power and a control to keep a temperature of the power generation unit (151B) constant within a predetermined temperature range, where the power output from the power generation unit (151B) is smaller than the power consumption of the auxiliaries, and a self-support mode for performing a control to cover the power consumption of the auxiliaries by power different from the grid power, wherein the power is supplied by the power generation unit (151B), a photovoltaic unit (130) and/or a storage battery unit (140),
wherein the self-support mode is a mode not to provide the power output from the power generation unit (151B) to a load connected to the fuel cell unit (150) and to keep a temperature at a power generation temperature,
wherein the predetermined temperature range in the constant temperature mode is lower than the power generation temperature in the self-support mode,
**characterized in that**
the control unit (230) is configured to control the operation of the control unit (150) itself by the self-support mode when a grid power failure occurs while the operation of the control unit (150) itself is controlled by the constant temperature mode
wherein
the control unit (230) is capable of controlling a distributed power supply unit capable of supplying the fuel cell unit with power, wherein the distributed power supply unit comprises the photovoltaic unit (130) and/or the storage battery unit (140), and
the control unit (230) is configured to control the distributed power supply unit to cover, for a predetermined period, the power consumption of the auxiliaries by the power output from the distributed power supply unit, when instructing the self-support mode in response to a power failure occurs while the fuel cell unit (150) is operated in the constant temperature mode,
wherein the predetermined period is a period during which fuel supplied to the power generation unit increases.

11. A control method of controlling a fuel cell unit (150) provided with a power generation unit (151B) which generates power upon chemical reaction and auxiliaries which assists an operation of the power generation unit (151B), comprising:
a step of instructing one of operation modes to the fuel cell unit (150), the operation modes including a constant temperature mode for performing a control to cover a power consumption of the auxiliaries by grid power and a control to keep a temperature of the power generation unit (151B) constant within a predetermined temperature range, where the power output from the power generation unit (151B) is smaller than the power consumption of the auxiliaries; and a self-support mode for performing a control to cover the power consumption of the auxiliaries by power different from the grid power, wherein the power is supplied by the power generation unit (151B), a photovoltaic unit (130) and/or a storage battery unit (140),
wherein the self-support mode is a mode not to provide the power output from the power generation unit (151B) to a load connected to the fuel cell unit (150) and to keep a temperature at a power generation temperature,
wherein the predetermined temperature range in the constant temperature mode is lower than the power generation temperature in the self-support mode,
**characterized in that**
the operation mode of the fuel cell unit (150) is instructed to be the self-support mode when a grid power failure occurs while the fuel cell unit (150) is operated in the constant temperature mode,
wherein the control method further comprises:
controlling a distributed power supply unit capable of supplying the fuel cell unit with power, wherein the distributed power supply unit comprises the photovoltaic unit (130) and/or the storage battery unit (140), to cover, for a predetermined period, the power consumption of the auxiliaries by the power output from the distributed power supply unit, when instructing the self-support mode in response to a power failure occurs while the fuel cell unit (150) is operated in the constant temperature mode,
wherein the predetermined period is a period during which fuel supplied to the power generation unit increases.

## Patentansprüche

1. Steuervorrichtung (200), die konfiguriert ist, eine Brennstoffzelleneinheit (150) zu steuern, die mit einer Stromerzeugungseinheit (151B), welche Strom nach einer chemischen Reaktion erzeugt, und Hilfseinrichtungen ausgestattet ist, die einen Betrieb der Stromerzeugungseinheit (151B) unterstützen, umfassend:
eine Steuereinheit (230), die konfiguriert ist, einen Betriebsmodus für die Brennstoffzelleneinheit (150) der Brennstoffzelleneinheit (150) anzuweisen, wobei
der Betriebsmodus der Brennstoffzelleneinheit (150) umfasst: einen Konstanttemperaturmodus zum Ausführen eines Steuerns, um den Stromverbrauch der Hilfseinrichtungen durch Netzstrom abzudecken, und eines Steuerns, um eine Temperatur der Stromerzeugungseinheit (151B) innerhalb eines vorbestimmten Temperaturbereichs konstant zu halten, wobei die Stromabgabe der Stromerzeugungseinheit (151B) kleiner ist als der Stromverbrauch der Hilfseinrichtungen, und einen Selbstversorgungsmodus zum Ausführen eines Steuerns, um den Stromverbrauch der Hilfseinrichtungen durch den vom Netzstrom verschiedenen Strom abzudecken, wobei der Strom durch die Stromerzeugungseinheit (151B), eine Photovoltaikeinheit (130) und/oder eine Akkumulatoreneinheit (140) geliefert wird,
wobei der Selbstversorgungsmodus ein Modus ist, die Stromabgabe der Stromerzeugungseinheit (151B) nicht an eine Last bereitzustellen, die mit der Brennstoffzelleneinheit (150) verbunden ist, und eine Temperatur auf einer Stromerzeugungstemperatur zu halten,
wobei der vorbestimmte Temperaturbereich in dem Konstanttemperaturmodus niedriger ist als die Stromerzeugungstemperatur im Selbstversorgungsmodus,
**dadurch gekennzeichnet, dass**
die Steuereinheit (230) konfiguriert ist, anzuweisen, die Betriebsart der Brennstoffzelleneinheit (150) in den Selbstversorgungsmodus zu ändern, wenn ein Netzstromausfall auftritt, während die Brennstoffzelleneinheit (150) im Konstanttemperaturmodus arbeitet,
wobei
die Steuereinheit (230) fähig ist, eine dezentrale Stromversorgungseinheit zu steuern, die fähig ist, Strom an die Brennstoffzelleneinheit zu liefern, wobei die dezentrale Stromversorgungseinheit die Photovoltaikeinheit (130) und/oder die Akkumulatoreneinheit (140) umfasst, und
die Steuereinheit (230) konfiguriert ist, die dezentrale Stromversorgungseinheit zu steuern, für einen vorbestimmten Zeitraum den Stromverbrauch der Hilfseinrichtungen durch die Stromabgabe der dezentralen Stromversorgungseinheit abzudecken, wenn sie als Reaktion darauf, dass ein Stromausfall auftritt, während die Brennstoffzelleneinheit (150) im Konstanttemperaturmodus betrieben wird, den Selbstversorgungsmodus anweist,
wobei der vorbestimmte Zeitraum ein Zeitraum ist, während dessen an die Stromerzeugungseinheit gelieferter Brennstoff zunimmt.

2. Steuervorrichtung nach Anspruch 1, wobei
der vorbestimmte Zeitraum ein Zeitraum ist, der andauert, bis die Temperatur der Stromerzeugungseinheit (151B) eine Stromerzeugungstemperatur erreicht, wenn Strom in der Stromerzeugungseinheit (151B) im Selbstversorgungsmodus erzeugt wird.

3. Steuervorrichtung (200) nach Anspruch 2, wobei
der vorbestimmte Temperaturbereich ein Temperaturbereich ist, der niedriger ist als die Stromerzeugungstemperatur im Selbstversorgungsmodus.

4. Steuervorrichtung (200) nach Anspruch 1, wobei
die Steuereinheit (230) konfiguriert ist, anzuweisen, die Betriebsart der Brennstoffzelleneinheit in den Konstanttemperaturmodus zu ändern, wenn die Brennstoffzelleneinheit im Selbstversorgungsmodus betrieben wird, während eine Wiederherstellung von einem Stromausfall erreicht wird.

5. Steuervorrichtung (200) nach Anspruch 1, wobei
die Steuereinheit (230) konfiguriert ist, einen Stromerzeugungsmodus als einen der Betriebsmodi anzuweisen, wobei der Stromerzeugungsmodus ein Modus ist, in dem die Stromabgabe der Stromerzeugungseinheit (151B) gesteuert wird, sodass sie einem Stromverbrauch einer mit der Brennstoffzelleneinheit verbundenen Last folgt.

6. Steuervorrichtung (200) nach Anspruch 5, wobei
die Steuereinheit (230) konfiguriert ist, anzuweisen, die Betriebsart der Brennstoffzelleneinheit (150) in den Selbstversorgungsmodus zu ändern, wenn ein Netzstromausfall auftritt, während die Brennstoffzelleneinheit (150) im Stromerzeugungsmodus arbeitet.

7. Steuervorrichtung (200) nach Anspruch 1, wobei
die Stromerzeugungseinheit (151B) eine Brennstoffzelle eines SOFC-Systems aufweist.

8. Steuervorrichtung (200) nach Anspruch 2, wobei
die Stromerzeugungstemperatur im Selbstversorgungsmodus 650°C bis 1000 °C beträgt und der vorbestimmte Temperaturbereich 450°C bis 600 °C beträgt.

9. Steuervorrichtung (200) nach Anspruch 1, wobei
eine Brennstoffmenge, die an die Stromerzeugungseinheit (151B) im Konstanttemperaturmodus zu liefern ist, kleiner ist als eine Brennstoffmenge, die an die Stromerzeugungseinheit (151B) im Selbstversorgungsmodus zu liefern ist.

10. Brennstoffzellensystem, das mit einer Brennstoffzelleneinheit (150) ausgestattet ist, die mit einer Stromerzeugungseinheit (151B), welche nach einer chemischen Reaktion Strom erzeugt, und Hilfseinrichtungen ausgestattet ist, die einen Betrieb der Stromerzeugungseinheit unterstützen, wobei
die Brennstoffzelleneinheit (150) eine Steuereinheit (230) umfasst, die konfiguriert ist, einen Betrieb der Brennstoffzelleneinheit (150) selbst durch einen von Betriebsmodi zu steuern, wobei die Betriebsmodi einen Konstanttemperaturmodus zum Ausführen eines Steuerns, um einen Stromverbrauch der Hilfseinrichtungen durch Netzstrom abzudecken, und eines Steuerns, um eine Temperatur der Stromerzeugungseinheit (151B) innerhalb eines vorbestimmten Temperaturbereichs konstant zu halten, wobei die Stromabgabe von der Stromerzeugungseinheit (151B) kleiner ist als der Stromverbrauch der Hilfseinrichtungen, und einen Selbstversorgungsmodus zum Ausführen eines Steuerns, um den Stromverbrauch der Hilfseinrichtungen durch den vom Netzstrom verschiedenen Strom abzudecken, umfassen, wobei der Strom durch die Stromerzeugungseinheit (151B), eine Photovoltaikeinheit (130) und/oder eine Akkumulatoreneinheit (140) geliefert wird,
wobei der Selbstversorgungsmodus ein Modus ist, die Stromabgabe der Stromerzeugungseinheit (151B) nicht an eine Last bereitzustellen, die mit der Brennstoffzelleneinheit (150) verbunden ist, und eine Temperatur auf einer Stromerzeugungstemperatur zu halten,
wobei der vorbestimmte Temperaturbereich in dem Konstanttemperaturmodus niedriger ist als die Stromerzeugungstemperatur im Selbstversorgungsmodus,
**dadurch gekennzeichnet, dass**
die Steuereinheit (230) konfiguriert ist, den Betrieb der Steuereinheit (150) selbst durch den Selbstversorgungsmodus zu steuern, wenn ein Netzstromausfall auftritt, während der Betrieb der Steuereinheit (150) selbst durch den Konstanttemperaturmodus gesteuert wird,
wobei
die Steuereinheit (230) fähig ist, eine dezentrale Stromversorgungseinheit zu steuern, die fähig ist, Strom an die Brennstoffzelleneinheit zu liefern, wobei die dezentrale Stromversorgungseinheit die Photovoltaikeinheit (130) und/oder die Akkumulatoreneinheit (140) umfasst, und
die Steuereinheit (230) konfiguriert ist, die dezentrale Stromversorgungseinheit zu steuern, für einen vorbestimmten Zeitraum den Stromverbrauch der Hilfseinrichtungen durch die Stromabgabe der dezentralen Stromversorgungseinheit abzudecken, wenn sie als Reaktion darauf, dass ein Stromausfall auftritt, während die Brennstoffzelleneinheit (150) im Konstanttemperaturmodus betrieben wird, den Selbstversorgungsmodus anweist,
wobei der vorbestimmte Zeitraum ein Zeitraum ist, während dessen an die Stromerzeugungseinheit gelieferter Brennstoff zunimmt.

11. Steuerverfahren zum Steuern einer Brennstoffzelleneinheit (150), die mit einer Stromerzeugungseinheit (151B), die Strom nach einer chemischen Reaktion erzeugt, und Hilfseinrichtungen ausgestattet ist, die einen Betrieb der Stromerzeugungseinheit (151B) unterstützen, umfassend:
einen Schritt des Anweisens von einem von Betriebsmodi an die Brennstoffzelleneinheit (150), wobei die Betriebsmodi einen Konstanttemperaturmodus zum Ausführen eines Steuerns, um den Stromverbrauch der Hilfseinrichtungen durch Netzstrom abzudecken, und eines Steuerns, um eine Temperatur der Stromerzeugungseinheit (151B) innerhalb eines vorbestimmten Temperaturbereichs konstant zu halten, wobei die Stromabgabe der Stromerzeugungseinheit (151B) kleiner ist als der Stromverbrauch der Hilfseinrichtungen, und einen Selbstversorgungsmodus zum Ausführen eines Steuerns, um den Stromverbrauch der Hilfseinrichtungen durch den vom Netzstrom verschiedenen Strom abzudecken, umfassen, wobei der Strom durch die Stromerzeugungseinheit (151B), eine Photovoltaikeinheit (130) und/oder eine Akkumulatoreneinheit (140) geliefert wird,
wobei der Selbstversorgungsmodus ein Modus ist, die Stromabgabe der Stromerzeugungseinheit (151B) nicht an eine Last bereitzustellen, die mit der Brennstoffzelleneinheit (150) verbunden ist, und eine Temperatur auf einer Stromerzeugungstemperatur zu halten,
wobei der vorbestimmte Temperaturbereich in dem Konstanttemperaturmodus niedriger ist als die Stromerzeugungstemperatur im Selbstversorgungsmodus,
**dadurch gekennzeichnet, dass**
der Betriebsmodus der Brennstoffzelleneinheit (150) angewiesen wird, der Selbstversorgungsmodus zu sein, wenn ein Netzstromausfall erfolgt, während die Brennstoffzelleneinheit (150) im Konstanttemperaturmodus arbeitet,
wobei das Steuerverfahren weiter umfasst:
Steuern einer dezentralen Stromversorgungseinheit, die fähig ist, Strom an die Brennstoffzelleneinheit zu liefern, wobei die dezentrale Stromversorgungseinheit die Photovoltaikeinheit (130) und/oder die Akkumulatoreneinheit (140) umfasst, um für einen vorbestimmten Zeitraum den Stromverbrauch der Hilfseinrichtungen durch die Stromabgabe von der dezentralen Stromversorgungseinheit abzudecken, wenn sie als Reaktion darauf, dass ein Stromausfall auftritt, während die Brennstoffzelleneinheit (150) im Konstanttemperaturmodus arbeitet, den Selbstversorgungsmodus anweist,
wobei der vorbestimmte Zeitraum ein Zeitraum ist, während dessen an die Stromerzeugungseinheit gelieferter Brennstoff zunimmt.

## Revendications

1. Appareil de commande (200) qui est configuré pour commander une unité de pile à combustible (150) avec une unité de génération de puissance (151B) qui génère une puissance par réaction chimique et des éléments auxiliaires qui facilitent un fonctionnement de l'unité de génération de puissance (151B), comprenant :
une unité de commande (230) qui est configurée pour ordonner un mode de fonctionnement de l'unité de pile à combustible (150), à l'unité de pile à combustible (150),
le mode de fonctionnement de l'unité de pile à combustible (150) comprenant : un mode à température constante pour effectuer une commande permettant de couvrir la consommation de puissance par les éléments auxiliaires par la puissance du réseau électrique et une commande pour maintenir une température de l'unité de génération de puissance (151B) constante dans une plage de température prédéterminée, le production de puissance de l'unité de génération de puissance (151B) étant inférieure à la consommation de puissance des éléments auxiliaires ; et un mode autonome pour effectuer une commande permettant de couvrir la consommation de puissance des éléments auxiliaires par une puissance différente du réseau électrique, la puissance étant fournie par l'unité de génération de puissance (151B), une unité photovoltaïque (130) et/ou une unité de batterie de stockage (140),
le mode autonome étant un mode ne permettant pas de fournir la puissance produite depuis l'unité de génération de puissance (151B) à une charge connectée à l'unité de pile à combustible (150), ni de maintenir une température à une température de génération de puissance,
la plage de température prédéterminée dans le mode à température constante étant inférieure à la température de génération de puissance dans le mode autonome,
l'unité de commande (230) étant configurée pour ordonner le changement du mode de fonctionnement de l'unité de pile à combustible (150) au mode autonome lorsqu'une panne du réseau électrique survient pendant que l'unité de pile à combustible (150) fonctionne dans le mode à température constante,
l'unité de commande (230) étant capable de commander une unité de fourniture de puissance répartie capable de fournir de la puissance à l'unité de pile à combustible, l'unité de fourniture de puissance répartie comprenant l'unité photovoltaïque (130) et/ou l'unité de batterie de stockage (140), et
l'unité de commande (230) étant configurée pour commander l'unité de fourniture de puissance répartie afin de couvrir, pendant une durée prédéterminée, la consommation de puissance des éléments auxiliaires en réponse à la survenue d'une coupure pendant que l'unité de pile à combustible (150) est utilisée dans le mode à température constante,
la durée prédéterminée étant une durée pendant laquelle le combustible fourni à l'unité de génération de puissance augmente.

2. Appareil de commande selon la revendication 1, dans lequel
la durée prédéterminée est une durée qui se termine lorsque la température de l'unité de génération de puissance (151B) atteint une température de génération de puissance lorsque de la puissance est générée au niveau de l'unité de génération de puissance (151B) dans le mode autonome.

3. Appareil de commande (200) selon la revendication 2, dans lequel
la plage de température prédéterminée est une plage de température inférieure à la température de génération de puissance dans le mode autonome.

4. Appareil de commande (200) selon la revendication 1, dans lequel
l'unité de commande (230) est configurée pour ordonner le changement du mode de fonctionnement de l'unité de pile à combustible au mode à température constante au rétablissement de la puissance après une coupure pendant que l'unité de pile à combustible est utilisée dans le mode autonome.

5. Appareil de commande (200) selon la revendication 1, dans lequel
l'unité de commande (230) est configurée pour ordonner un mode de génération de puissance en tant que l'un des modes de fonctionnement, le mode de génération de puissance étant un mode dans lequel la puissance produite par l'unité de génération de puissance (151B) est commandée pour suivre une consommation de puissance d'une charge connectée à l'unité de pile à combustible.

6. Appareil de commande (200) selon la revendication 5, dans lequel
l'unité de commande (230) est configurée pour ordonner le changement du mode de fonctionnement de l'unité de pile à combustible (150) au mode autonome lorsqu'une coupure de puissance survient pendant l'unité de pile à combustible (150) est utilisée dans le mode de génération de puissance.

7. Appareil de commande (200) selon la revendication 1, dans lequel
l'unité de génération de puissance (151B) possède une pile à combustible d'un système SOFC.

8. Appareil de commande (200) selon la revendication 2, dans lequel la température de génération de puissance dans mode autonome est de 650°C à 1000 °C, et la plage de température prédéterminée est de 450°C à 600°C.

9. Appareil de commande (200) selon la revendication 1, dans lequel
une quantité de combustible à fournir à l'unité de génération de puissance (151B) dans le mode à température constante est inférieure à une quantité de combustible à fournir à l'unité de génération de puissance (151B) dans le mode autonome.

10. Système de pile à combustible muni d'une unité de pile à combustible (150) munie d'une unité de génération de puissance (151B) qui génère une puissance par réaction chimique et des éléments auxiliaires qui facilitent le fonctionnement de l'unité de génération de puissance, dans lequel
l'unité de pile à combustible (150) comprend une unité de commande (230) qui est configurée pour ordonner un mode de fonctionnement de l'unité de pile à combustible (150) elle-même par l'un de plusieurs modes de fonctionnement, les modes de fonctionnement comprenant un mode à température constante pour effectuer une commande permettant de couvrir une consommation de puissance des éléments auxiliaires par la puissance du réseau électrique et une commande pour maintenir une température de l'unité de génération de puissance (151B) constante dans une plage de température prédéterminée, la puissance produite par l'unité de génération de puissance (151B) étant inférieure à la consommation de puissance des éléments auxiliaires, et un mode autonome pour effectuer une commande permettant de couvrir la consommation de puissance des éléments auxiliaires par une puissance différente du réseau électrique, la puissance étant fournie par l'unité de génération de puissance (151B), une unité photovoltaïque (130) et/ou une unité de batterie de stockage (140),
le mode autonome étant un mode ne permettant pas de fournir la puissance produite depuis l'unité de génération de puissance (151B) à une charge connectée à l'unité de pile à combustible (150), ni de maintenir une température à une température de génération de puissance,
la plage de température prédéterminée dans le mode à température constante étant inférieure à la température de génération de puissance dans le mode autonome,
**caractérisé en ce que**
l'unité de commande (230) est configurée pour ordonner le changement du mode de fonctionnement de l'unité de pile à combustible (150) au mode autonome lorsqu'une panne du réseau électrique survient pendant que le fonctionnement de l'unité de commande (150) elle-même est commandé par le mode à température constante,
l'unité de commande (230) étant capable de commander une unité de fourniture de puissance répartie capable de fournir de la puissance à l'unité de pile à combustible, l'unité de fourniture de puissance répartie comprenant l'unité photovoltaïque (130) et/ou l'unité de batterie de stockage (140), et
l'unité de commande (230) est configurée pour commander l'unité de fourniture de puissance répartie afin de couvrir, pendant une durée prédéterminée, la consommation de puissance des éléments auxiliaires par la puissance produite à partir de l'unité de fourniture de puissance répartie, lors de l'ordre de passage au mode autonome en réponse à la survenue d'une coupure pendant que l'unité de pile à combustible (150) est utilisée dans le mode à température constante,
la durée prédéterminée étant une durée pendant laquelle le combustible fourni à l'unité de génération de puissance augmente.

11. Procédé de commande permettant de commander une unité de pile à combustible (150) munie d'une unité de génération de puissance (151B) qui génère de la puissance par réaction chimique et d'éléments auxiliaire qui facilitent un fonctionnement de l'unité de génération de puissance (151B), comprenant :
une étape consistant à ordonner le passage à l'un de plusieurs mode de fonctionnement à l'unité de pile à combustible (150), les modes de fonctionnement comprenant un mode à température constante pour effectuer une commande permettant de couvrir une consommation de puissance des éléments auxiliaires par la puissance du réseau électrique et une commande pour maintenir une température de l'unité de génération de puissance (151B) constante dans une plage de température prédéterminée, la puissance produite par l'unité de génération de puissance (151B) étant inférieure à la consommation de puissance des éléments auxiliaires ; et un mode autonome pour effectuer une commande permettant de couvrir la consommation de puissance des éléments auxiliaires par une puissance différente du réseau électrique, la puissance étant fournie par l'unité de génération de puissance (151B), une unité photovoltaïque (130) et/ou une unité de batterie de stockage (140),
le mode autonome étant un mode ne permettant pas de fournir la puissance produite depuis l'unité de génération de puissance (151B) à une charge connectée à l'unité de pile à combustible (150), ni de maintenir une température à une température de génération de puissance,
la plage de température prédéterminée dans le mode à température constante étant inférieure à la température de génération de puissance dans le mode autonome,
**caractérisé en ce que**
le mode de fonctionnement de l'unité de pile à combustible (150) ordonné est le mode autonome lorsqu'une coupure de puissance du réseau électrique survient pendant que l'unité de pile à combustible (150) est utilisée dans le mode à température constante,
le procédé de commande comprenant en outre :
la commande d'une unité de fourniture de puissance répartie capable de fournir de la puissance à l'unité de pile à combustible, l'unité de fourniture de puissance répartie comprenant l'unité photovoltaïque (130) et/ou l'unité de batterie de stockage (140), afin de couvrir, pendant une durée prédéterminée, la consommation de puissance des éléments auxiliaires par la puissance produite à partir de l'unité de fourniture de puissance répartie, lors de l'ordre de passage au mode autonome en réponse à la survenue d'une coupure pendant que l'unité de pile à combustible (150) est utilisée dans le mode à température constante,
la durée prédéterminée étant une durée pendant laquelle le combustible fourni à l'unité de génération de puissance augmente.
